Europäisches Patentamt

European Patent Office

Office européen des brevets

(19)

(11) Publication number: **0 068 800**
**B1**

(12) EUROPEAN PATENT SPECIFICATION

(45) Date of publication of patent specification: **08.06.88**

(21) Application number: **82303253.7**

(22) Date of filing: **22.06.82**

(51) Int. Cl.⁴: **B 29 D 11/02,** C 08 J 7/00, **B 29 D 11/00,** C 08 J 7/12, C 08 J 7/14

(54) Process for improving the surface characteristics of contact lenses.

(30) Priority: **22.06.81 JP 96162/81**
**09.10.81 JP 160249/81**
**29.12.81 JP 213132/81**

(43) Date of publication of application:
**05.01.83 Bulletin 83/01**

(45) Publication of the grant of the patent:
**08.06.88 Bulletin 88/23**

(84) Designated Contracting States:
**DE FR GB**

(56) References cited:
**DE-A-2 123 766**
**DE-C- 860 272**
**FR-A-2 155 553**
**GB-A- 593 677**

**CHEMICAL ABSTRACTS, vol. 83, no. 8, 25th August 1975, page 78, col. 2, no. 60325h, Columbus Ohio (USA);**

**PATENTS ABSTRACTS OF JAPAN, vol. 3, no. 91(C-76)836r, 3rd August 1979, page 94 C 54;**

**PATENTS ABSTRACTS OF JAPAN, vol. 5, no. 164, 21st October 1981, page C-76 (836);**

(73) Proprietor: **JAPAN SYNTHETIC RUBBER CO., LTD.**
**11-24, Tsukiji-2-chome Chuo-ku**
**Tokyo 104 (JP)**

(73) Proprietor: **Ricky Contact Lens Research Institute Inc.**
**7, Yotsuya-3-chome**
**Shinjuku Tokyo (JP)**

(72) Inventor: **Suminoe, Taro**
**25-17, Komaba-1-chome**
**Meguro-ku Tokyo (JP)**
Inventor: **Ito, Tetsuo**
**13-3, Naruse-1-chome**
**Machida-shi (JP)**
Inventor: **Kiyomatsu, Yasuhiro**
**523, Senmarudai, Araicho**
**Hodogaya-ku Yokohama (JP)**
Inventor: **Shimuzu, Takao**
**32-13, Shimotoda-2-chome**
**Toda-shi (JP)**

(74) Representative: **Tubby, David George et al**
**MARKS & CLERK 57-60 Lincoln's Inn Fields**
**London WC2A 3LS (GB)**

# 0 068 800

**Description**

The present invention relates to a process for improving the surface characteristics of contact lenses.

Known contact lenses can generally be divided into two classes: non-hydrous contact lenses and hydrous contact lenses. The non-hydrous contact lenses may be hard contact lenses consisting essentially of a polymethyl methacrylate, or soft contact lenses, consisting essentially of a polysiloxane. Hydrous contact lenses are soft contact lenses of the hydrogel type and consist essentially of a poly(2-hydroxyethyl methacrylate) or a polyvinylpyrrolidone.

All of these lenses have problems. In the case of hard contact lenses consisting of a polymethyl methacrylate, stains formed on the lens surface (such as palpebral sebum, finger sebum or cosmetics) are difficult to remove and must be removed with use of a special cleaning solution. Moreover, the hydrophilicity, i.e. the wettability, of the lens surfaces is poor and, as a result, the ability of the lenses to move on the eyeball is inferior; this also results in the adhesion of such materials as palpebral sebum to the lens surfaces, causing reduced visibility. In the case of soft contact lenses consisting essentially of a polysiloxane, as with hard contact lenses consisting essentially of a polymethyl methacrylate, surface stains are difficult to remove and the hydrophilicity of the lens surfaces is poor.

It was in order to develop a contact lens having good hydrophilicity that the hydrogel-type soft contact lenses were produced. However, because these lenses are highly hydrous, their forms and dimensions are liable to change and also their interiors are susceptible to contamination by bacteria. This necessitates sterilization of the lenses with boiling water or a chemical solution, which accelerates deterioration of the lens material.

We have now found that the problems of the known lenses can be overcome by subjecting a shaped article consisting of a polymer of an acrylate and/or a methacrylate to a special surface treatment.

Thus, the present invention consists in a process for treating the surface of a substantially non-hydrous contact lens formed of a polymer comprising at least 80 mole percent of at least one acrylate and/or methacrylate, from 0.5 to 10 mole percent of at least one polyfunctional monomer and from 0 to 5% by volume of acrylic acid, which process comprises treating said contact lens under such conditions as to effect a surface layer of the lens of thickness from 0.01 to 50 µm with

(a) an aqueous solution of an inorganic salt and/or an organic salt at atmospheric pressure and at a temperature of from 90°C to the boiling point of the solution; or

(b) an aqueous solution of an inorganic salt and/or an organic salt at superatmospheric pressure and at a temperature of from 100°C to the boiling point of the solution; or

(c) an aqueous solution of an alkali having a concentration of from 5 to 50% by weight at a temperature of from 30 to 120°C; or

(d) an aqueous solution of an acid having a concentration of from 5 to 90% by weight at a temperature of from 60 to 100°C; or

(e) steam.

Contact lenses treated by the process of the invention are characterised in that stains formed on their surfaces are quite easily removable and that these lenses are hydrophilic and have excellent wettability. In addition, because only the surfaces of the lenses are altered by the process of the invention, the lenses themselves are substantially non-hydrous and their forms and dimensions can be retained with great precision.

Contact lenses treated by the process of the present invention, unlike conventional contact lenses consisting of polymethyl methacrylate or polysiloxane, are very easy to handle since stains formed on lens surfaces (such as finger sebum and cosmetics) can be removed simply by washing with water without the need for any special cleaning solution. Moreover, the surfaces of the contact lenses are hydrophilic, have excellent wettability, are easy to move on the eyeballs when applied, do not pick up palpebral sebum on the lens surfaces and can, therefore, retain their original visibility. Furthermore, because these contact lenses are substantially non-hydrous, their forms and dimensions do not change and their interiors are not contaminated with bacteria.

Suitable acrylates which may be used to produce the polymers include methyl acrylate, ethyl acrylate, propyl acrylate, isopropyl acrylate, butyl acrylate, isobutyl acrylate, t-butyl acrylate, 2-ethylhexyl acrylate and octyl acrylate. Examples of suitable methacrylates include ethyl methacrylate, propyl methacrylate, isopropyl methacrylate, butyl methacrylate, isobutyl methacrylate, t-butyl methacrylate, 2-ethylhexyl methacrylate, hexyl methacrylate and octyl methacrylate. A single one of these compounds may be used alone to produce a homopolymer or a mixture of any two or more of these acrylates and methacrylates may be polymerized to produce a copolymer. These acrylates and/or methacrylates are polymerized in an amount of at least 80 mole % of the total monomer used to produce the polymer.

In order to increase the mechanical strength of the lens and also enable the lens to maintain its form and dimensions more precisely, the acrylate and/or methacrylate monomer is copolymerized with a polyfunctional monomer to create a crosslinked structure in the polymer. Suitable polyfunctional monomers which may be used for crosslinking purposes include: glycol diacrylates of olefins or polyolefins, for example ethylene glycol diacrylate, diethylene glycol diacrylate or triethylene glycol diacrylate; glycol dimethacrylates of olefins or polyolefins, for example ethylene glycol dimethacrylate, diethylene glycol dimethacrylate or triethylene glycol dimethacrylate; and polyfunctional acrylates or methacrylates, such as trimethylolpropane trimethacrylate, allyl acrylate and vinyl-substituted benzyl acrylates. These polyfunctional monomers are employed in an amount of from 0.5 to 10 mole %, of the total monomers employed to produce the polymer. If the polyfunctional monomer is used in an amount of less than 0.5 mol %, it does not impart sufficient improvement in mechanical strength to the lens. On the other hand, if the amount of polyfunctional monomer is greater than 10 mole %, treatment of the lens in accordance with the present invention takes a longer time and gives a less satisfactory improvement in surface properties.

Various means may be employed for shaping the polymer into a contact lens for treatment by the process of the invention. For example, the monomeric material may be polymerized in a mould to give a polymer block, which is then cut into the form of contact lenses. Alternatively, the monomeric material may be directly polymerized in a mould having the form of contact lenses.

Polymerization of the monomeric material may be effected by means well known for the production of this type of polymer. For example, it may be initiated with a polymerization initiator such as a peroxide (e.g. benzoyl peroxide or lauroyl peroxide), an azo compound (e.g. azobisisobutyronitrile) or a carbonium compound (e.g. diacetyl, benzoin or dibenzoin ether). Alternatively, it may be initiated by the use of heat or irradiation, for example with ultraviolet light or electron rays. The polymerization temperature is not critical, provided that the monomeric material to be polymerized can be maintained in a liquid state at this temperature. However, it is generally preferable to conduct the polymerization at a temperature as close as possible to room temperature in order to reduce the strains on the shaped article to a level as low as possible.

When the polymer is a soft polymer having a low glass transition temperature and, as a result, production of a lens from the polymer by cutting or a similar operation is difficult, it is, of course, possible, rather than producing the soft polymer directly, to copolymerize a polyfunctional monomer with one or more of the aforementioned acrylate and/or methacrylate monomers and, if necessary, acrylic acid to give a hard polymer having a crosslinked structure and a high glass transition temperature, this polymer then being cut to the desired shape and then subjected to suitable chemical modification (e.g. ester-interchange or esterifying the ester or carboxyl group of the polymer with an alcohol) to convert the polymer to the desired soft polymer having a low glass transition temperature. The techniques involved in this method are disclosed in United States Patent Specification No. 3,850,892. Using this method, contact lenses of a soft polymer having a precise form and dimensions can easily be produced. These can then be treated in accordance with the present invention to improve their surface characteristics.

After producing the polymer and the contact lens from the polymer, the lens is then treated in accordance with the present invention with a hot aqueous solution of a salt, with an aqueous alkali solution or with an aqueous acid solution or with any combination of these solutions, or with steam.

Treatment with the hot aqueous salt solution may be conducted by dipping the lens into the hot solution at superatmospheric pressure or atmospheric pressure, although we usually prefer to conduct the operation at a pressure up to 5 atm. absolute (up to 5.07 bars). The temperature of the hot solution may vary depending upon the treatment pressure. The treatment time will, of course, vary with the treatment temperature, being shorter as the temperature increases.

If the treatment of the lens is conducted at atmospheric pressure, the treatment temperature is from 90°C to the boiling point.

If the treatment temperature is low, sufficient improvement of the surface characteristics of the lens takes too long a time. Also, if the treatment time is too short, it is difficult to achieve uniform improvement of the whole of the surface of the lens. On the other hand, if the time is too long, the surface of the lens tends to become rough.

If the treatment with an aqueous solution of an inorganic or organic salt is conducted under an applied pressure up to 5 atm. absolute (5.07 bars), the treatment temperature is from 100°C to the boiling point. In this case, it is possible to make the treatment time relatively short because of the high temperature.

Using an aqueous solution of an inorganic or organic salt ensures that, even if the lens is relatively thick (e.g. it has a thickness greater than 0.3 mm), the surface of the polymer can be improved without reducing its light transmittance.

Suitable inorganic salts which may be used in the treatment include such compounds as sulphites, sulphates, nitrites, nitrates, phosphates and halides of metals from Groups Ia, Ib, IIa, IIb, IIIa, IVa, VIb, VIIb and VIII of the Periodic Table of the Elements.

Specific examples of these compounds include sodium sulphite, potassium sulphite, sodium sulphate, potassium sulphate, sodium hydrogen sulphate (monohydrate), zinc sulphate (hexahydrate), copper sulphate (pentahydrate), aluminium sulphate, chromous sulphate (heptahydrate), stannous sulphate (dihydrate), manganese sulphate, ferrous sulphate (heptahydrate), nickel sulphate (hexahydrate), sodium nitrite, potassium nitrite, barium nitrite, sodium nitrate, potassium nitrate, calcium nitrate (tetrahydrate), barium nitrate, cobalt nitrate (hexahydrate), nickel nitrate (hexahydrate), sodium phosphate (dodecahydrate), potassium phosphate, lithium chloride, sodium chloride, potassium chloride, beryllium chloride (tetrahydrate), calcium chloride (hexahydrate), magnesium chloride (hexahydrate), barium chloride (dihydrate), cuprous chloride (dihydrate), aluminium chloride (hexahydrate), lead dichloride (dihydrate), manganese chloride (tetrahydrate), ferrous chloride (tetrahydrate), ferric chloride (hexahydrate), cobalt chloride, nickel chloride (hexahydrate) and lithium bromide.

Preferred organic salts for use in the treatment include such compounds as formates, acetates and citrates of metals from Groups Ia and IIa of the Periodic Table of the Elements. Specific examples of such compounds include sodium formate, potassium formate, calcium formate, sodium acetate (trihydrate), potassium acetate, calcium acetate (monohydrate), zinc acetate (dihydrate), lead acetate (trihydrate), nickel acetate, sodium citrate (dihydrate), potassium citrate (monohydrate) and calcium citrate (tetrahydrate).

In the above lists of salts, where a hydrate is mentioned, this is generally the most convenient compound to use but it will, of course, be appreciated that it would also be possible to use the anhydrous salt or the salt in a different state of hydration. The above compounds are all soluble in water and do not decompose even in hot water. They are all used in the form of an aqueous solution.

The concentrations of these inorganic and/or organic salts in their aqueous solutions are not particularly critical but we generally prefer that the concentration should be below the saturation point of the salt, preferably in the range from 2% by weight to the saturation point. Addition of quantities of these compounds above the saturation point does not increase their effect.

It is also possible to carry out the treatment of the present invention using an aqueous alkali solution. The alkali employed is preferably sodium hydroxide or potassium hydroxide. The concentration of the aqueous alkali solution is from 5 to 50% by weight and the treatment temperature is from 30°C to 120°C. Under these conditions, the treatment time is usually from 0.5 to 48 hours. If the concentration of aqueous alkali is less than 5% by weight or the treatment temperature is less than 30°C, a longer time will be required in order to achieve the desired improvement to the surface of the lens and this time is too much. On the other hand, if the concentration of the alkali solution is greater than 50% by weight or the treatment temperature exceeds 120°C, it is difficult to improve the qualities of the surface uniformly and it is therefore difficult to provide a contact lens having a uniform quality.

If an aqueous acid solution is used, the acid may be, for example, hydrochloric acid, sulphuric acid or acetic acid. The concentration of the acid solution is from 5 to 90% by weight and the treatment temperature is from 60°C to 100°C. In this case, the treatment time is usually from 3 to 48 hours. If the concentration of the acid solution is less than 5% by weight or the treatment temperature is less than 60°C, too much time is required in order to achieve sufficient improvement to the surface of the lens. On the other hand, if the concentration of acid exceeds 90% by weight or the treatment temperature is greater than 100°C, this results in some cases, in deterioration of the polymer and production of a lens having an improved surface and a uniform quality becomes difficult.

It can be seen that the conditions for treatment with an aqueous alkali solution are milder than those for treatment with the aqueous acid solution and, accordingly, the surface of the lens can be improved more easily by treatment with the alkali solution.

A further improvement to the surface characteristics of the lens can be obtained by carrying out treatment with an aqueous alkali solution followed by treatment with an aqueous acid solution. Conditions for treatment with the acid solution may, in this case, be made milder than when treatment is effected only by means of the aqueous acid. In this case, the concentration of aqueous acid is preferably from 1 to 30% by weight, the treatment temperature is preferably from 20°C to 100°C and the treatment time is preferably from 5 seconds to 24 hours.

The degree of improvement in the surface characteristics of the lens due to treatment with the aqueous alkali solution and/or treatment of the aqueous acid solution can easily be adjusted by changing the conditions under which the treatment takes place. The conditions must be such that the improved surface of the lens has an overall thickness of from 0.01 to 50 μm, preferably from 0.01 to 20 μm. If the improved surface is thinner than 0.01 μm, its hydrophilicity is poor and it is difficult to remove stains from it. On the other hand, if the surface is thicker than 50 μm, it possesses properties characteristic of hydrogels and there arises the possibility of contamination by bacteria.

The improved surface of the lens formed by treatment with an aqueous alkali solution and/or with an aqueous acid solution can be further improved by treatment with a polyhydric alcohol in the presence of an acid catalyst. We prefer that, prior to treatment with the polyhydric alcohol, the lens should have been subjected to treatment with the aqueous alkali and/or aqueous acid, then washed with water and dried. Suitable acid catalysts include concentrated sulphuric acid and methanesulphonic acid. Suitable polyhydric alcohols include ethylene glycol, glycerol and polyethylene glycol. The amount of catalyst used is preferably from 0.1 to 5 parts by weight per 100 parts by weight of the polyhydric alcohol.

The treatment with the polyhydric alcohol is usually carried out at a temperature of from 70°C to 200°C and for a time of from 1 to 24 hours. This treatment with the polyhydric alcohol further stabilizes the improvement in the surface characteristics of the lens.

After treatment with an aqueous alkali, an aqueous acid or the polyhydric alcohol, it is necessary that the lens should be thoroughly washed with water.

Treatment with the aqueous alkali solution, the aqueous acid solution or the polyhydric alcohol imparts particularly improved oxygen permeability to the contact lens.

Alternatively, another way of subjecting the lens to hot water treatment is to spray steam onto its surface. For example, the lens may be supported in a metal case whilst steam is sprayed onto it for a suitable length of time. Of course, the degree of improvement in the surface of the lens will vary depending upon the length of the steam treatment, although the treatment time is generally from 5 minutes to 8 hours.

Since the improved surface of the lens achieved by means of the process of the invention is not due to coating of another material on the lens, there is no possibility of reversing the improvement by peeling off the coating material.

The resulting contact lens is very easy to handle (unlike conventional contact lenses produced from polymethyl methacrylate or polysiloxanes), because stains (e.g. finger sebum or cosmetics) adhering to the lens surface can be removed simply by washing with water without the need to use a special cleaning solution. Moreover, the contact lens is hydrophilic, has excellent wettability and moves easily on the eyeballs. Since palpebral sebum does not attach to the contact lens, the contact lens can maintain its good visibility. Also, since the improved surface is not a laminated or coated layer but is substantially integral with the polymer of the lens interior, use of the contact lens does not gradually reduce the improvement by wear over a long period of time. Also, because the contact lens is substantially non-hydrous, there is no change in its form or dimensions as a result of variation in water content and there is no contamination of the lens interior with bacteria.

The invention is further illustrated by reference to the following Examples, in which all percentages are by weight unless otherwise specified.

Example 1

Into a polyethylene mould having a diameter of 15 mm and a height of 20 mm were poured 1.5 ml of a mixture consisting of 300 ml of acrylic acid, 280 ml of butyl methacrylate, 30 ml of ethylene glycol methacrylate and 6 mg of benzoin. The mixture was polymerized at room temperature under a nitrogen atmosphere, initiated by ultraviolet irradiation. The polymer block obtained was shaped into contact lens by ordinary cutting. This shaped article was then dipped into propanol and, after the addition of 1% of methanesulphonic acid, was allowed to react for 24 hours at reflux temperature to esterify 93% of the carboxyl groups in the polymer. After the reaction, the lens was washed with propanol and dried, to give a soft shaped article having the form of a contact lens (maximum thickness 0.2 mm) and consisting of a copolymer derived from propyl acrylate, butyl methacrylate, acrylic acid and ethylene glycol dimethacrylate.

Example 2

An article having the shape of a contact lens with a maximum thickness of 0.6 mm, prepared as described in Example 1, was placed in a stainless steel container containing a 5% aqueous solution of sodium chloride, and the solution was then boiled for 1 hour at atmospheric pressure. The article was then washed with water and evaluated as a contact lens. The results are shown in Table 1.

Example 3

An article having the shape of a contact lens with a maximum thickness of 0.2 mm, prepared as described in Example 1, was placed in a stainless steel container containing a 5% aqueous solution of sodium acetate. The solution was then boiled for 1 hour at atmospheric pressure. The article was then washed with water and evaluated as a contact lens. The results are shown in Table 1.

Example 4

A mixture consisting of 300 ml of acrylic acid, 280 ml of butyl acrylate, 20 ml of diethylene glycol dimethacrylate and 6 mg of benzoin was polymerized under the conditions described in Example 1. The resulting polymer was cut into the form of a contact lens and then dipped in butanol and reacted as in Example 1 to esterify 90% of the carboxyl groups in the polymer. After the reaction, the article was washed with butanol and then dried to give a soft shaped article having the form of a contact lens with a maximum thickness of 0.4 mm and comprising a copolymer of butyl acrylate, acrylic acid and diethylene glycol dimethacrylate. This soft shaped article was placed in a stainless steel container containing a 3% aqueous solution of sodium chloride and heated for 5 hours at 90°C under atmospheric pressure. The article was then washed with water and evaluated as a contact lens. The results are shown in Table 1.

TABLE 1

| Evaluation item | Example 2 | Example 3 | Example 4 |
|---|---|---|---|
| (a) Removability of stain | Good | Good | Good |
| (b) Wettability | Good | Good | Good |
| (c) Contact angle of water | 76° | 78° | 77° |
| (d) Visibility range when applied | Good | Good | Good |
| (e) Movability on eyeball when applied | Good | Good | Good |
| (f) Durability of lens surface | Good | Good | Good |
| (g) Light transmittance | Above 92% | Above 92% | Above 92% |
| (h) Abnormality when used for a long time<br>Contact lens<br>Cornea | Good<br>Good | Good<br>Good | Good<br>Good |

Notes:

(a) Removability of stains was examined by dipping a dry contact lens in water for 5 seconds, coating a cold cream on the lens, washing the lens with water whilst keeping the lens between the thumb and forefinger and then holding the lens in the air to observe the condition of water droplet adhesion on the lens. Where there was no oily matter and good wetting with water, this is shown as "good"; on the other hand, where oily matter remained and water was repelled, this is shown as "bad".

(b) Wettability with water was examined by dipping a dry contact lens in water for 5 seconds, taking out the lens into the air and observing the condition of water droplet adhesion on the lens. Where the entire surface of the lens was well wetted with water, this is shown as "good"; where the water is repelled, this is shown as "bad".

(c) The contact angle of water was obtained by using a sliced disc of diameter 13 mm and thickness 0.2 mm cut differently from the contact lens but otherwise treated the same as the contact lens. The angle was measured using a Contact Angle Tester Model CA-A (manufactured by Kyowa Kagaku) in accordance with the water droplet method.

(d) The visibility range was evaluated by applying a contact lens to the eye and is assessed as "good" where the lens had good visibility and "bad" where the lens gave cloudiness on blinking.

(e) Movability on the eyeball when applied was evaluated by examining whether or not a contact lens on the eyeball moved on blinking. "Good" refers to a lens of moderate movability and "bad" to a lens of bad movability.

(f) Durability of the lens surface was evaluated by holding a contact lens between the thumb and forefinger, rubbing the lens with these fingers 2000 times in water, withdrawing it into the air and examining the condition of water droplet, adhesion to the lens. Where the entire surface of the lens was well wetted, this is shown as "good"; where the surface of the lens repelled water, this is shown as "bad".

(g) Light transmittance was obtained using a sliced disc of diameter 13 mm and thickness 0.2 mm cut differently from the contact lens but otherwise treated the same as the contact lens. The transmittance of visible light having a wavelength of 800 to 380 nm through the disc was measured with a Double Beam Spectrophotometer Model 200-20 (manufactured by Hitachi).

(h) Abnormality when used for a long time was evaluated by using the contact lens for 8 hours per day for 1 month and then examining the condition of the contact lens and of the cornea. In the case of the contact lens, stains due to palpebral sebum etc. as well as its transparency were examined. A contact lens having no stain due to palpebral sebum and retaining its original transparency is shown as "good". A contact lens showing stains from palpebral sebum and having a reduced transparency is shown as "bad". In the case of the cornea, ocular abnormality was examined; a lens which did not cause abormality to the cornea is indicated as "good" whilst a lens which gave corneal abrasion is indicated as "bad".

Example 5

Into a polyethylene mould having a diameter of 15 mm and a height of 20 mm was poured 1.5 ml of a mixture prepared from 100 ml of butyl acrylate, 120 ml of butyl methacrylate, 260 ml of t-butyl acrylate, 60 ml of ethylene glycol dimethacrylate and 6 mg of benzoin. This mixture was then polymerized at room temperature under a nitrogen atmosphere by means of ultraviolet irradiation. The resulting polymer block was shaped into a contact lens of maximum thickness 0.4 mm by simple cutting. The resulting article was dipped in a 10% aqueous solution of sodium hydroxide and heated at 50°C for 4 hours. It was then washed with water, dried and evaluated as a contact lens. The results are shown in Table 2.

Example 6

An article having the shape of a contact lens of maximum thickness of 0.4 mm, prepared as described in Example 5, was dipped into a 10% aqueous solution of sodium hydroxide, treated at 50°C for 4 hours and then thoroughly washed with water. The article was then dipped into a 3.6% aqueous solution of hydrochloric acid for 1 hour at room tempreature, after which it was washed with water, dried and evaluated as a contact lens. The results are shown in Table 2.

Example 7

An article having the shape of a contact lens of maximum thickness 0.4 mm, prepared as described in Example 5, was dipped in a 10% aqueous solution of sulphuric acid and heated at 90°C for 24 hours, after which it was washed with water, dried and evaluated as a contact lens. The results are shown in Table 2.

Example 8

An article having the shape of a contact lens of maximum thickness 0.4 mm, prepared as described in Example 5, was subjected to the same alkaline treatment and then the same acid treatment as in Example 6, after which it was thoroughly washed with water and dried. The article was then placed in a 500 ml flask, together with 200 g of ethylene glycol and 1 g of methanesulphonic acid, and heated at 120°C for 18 hours, after which it was washed with water and dried. The article was then evaluated as a contact lens and the results are shown in Table 2.

Example 9

An article having the shape of a contact lens of maximum thickness 0.4 mm, prepared as described in Example 5, was dipped in a 20% aqueous solution of sodium hydroxide for 3 hours at 50°C, washed with water and dried. It was then placed in a 500 ml flask with 200 g of ethylene glycol and 3 g of methanesulphonic acid, where it was heated at 120°C for 24 hours. It was then washed with water, dried and evaluated as a contact lens. The results are shown in Table 2.

Comparative example 1

An article having the shape of a contact lens of maximum thickness 0.4 mm, prepared as described in Example 5, was evaluated without being subjected to any further treatment. The results are shown in Table 2.

TABLE 2

| Evaluation item | Ex. 5 | Ex. 6 | Ex. 7 | Ex. 8 | Ex. 9 | Comp. Ex. 1 |
|---|---|---|---|---|---|---|
| (a) Removability of stain | Good | Good | Good | Good | Good | Bad |
| (b) Wettability | Good | Good | Good | Good | Good | Bad |
| (c) Contact angle of water | 77° | 80° | 82° | 79° | 80° | 95° |
| (d) Visibility range when applied | Good | Good | Good | Good | Good | Bad |
| (e) Movability on eyeball when applied | Good | Good | Good | Good | Good | Bad |
| (f) Durability of improved layer | Good | Good | Good | Good | Good | Bad |
| (g) Light transmittance | Above 90% | Above 90% | Above 90% | Above 90% | Above 90% | Above 90% |
| (h) Anormality when used for long time<br>　　　　Contact lens<br>　　　　Cornea | Good<br>Good | Good<br>Good | Good<br>Good | Good<br>Good | Good<br>Good | Bad<br>Bad |
| (i) Thickness of improved layer (μm) | 5 | 5 | 4 | 5 | 5 | 0 |

Note:

Items (a) to (h) were evaluated in the same manners as in Table 1, respectively. Item (i), thickness of improved layer, was measured by cutting a contact lens and examining the thickness of improved layer by means of a polarizing microscope.

### Example 10

Into a polyethylene mould having a diameter of 15 mm and a height of 20 mm was poured 1.5 ml of a mixture prepare from 260 ml of acrylic acid, 280 ml of butyl methacrylate, 30 ml of ethylene glycol dimethacrylate and 6 mg of benzoin. The mixture was polymerized at room temperature under a nitrogen atmosphere by means of ultraviolet irradiation. The polymer block thus obtained was cut into the form of a contact lens. The resulting shaped article was dipped into propanol and, after the addition of 1% of methanesulphonic acid, allowed to react for 24 hours at reflux temperature to esterify 93% of the carboxyl groups in the polymer. After the reaction, the article was washed with water and dried to give a soft shaped article having the form of a contact lens of maximum thickness 0.4 mm. This article was treated as described in Example 5 and then evaluated as a contact lens. The results are shown in Table 3.

### Example 11

A soft article having the shape of a contact lens of maximum thickness 0.4 mm, prepared as described in Example 10, was treated as in Example 6 and then evaluated as a contact lens. The results are shown in Table 3.

### Example 12

A soft article having the shape of a contact lens of maximum thickness 0.4 mm, prepared as described in Example 10, was treated as in Example 7 and evaluated as a contact lens. The results are shown in Table 3.

### Example 13

A soft article having the shape of a contact lens of maximum thickness 0.4 mm, prepared as described in Example 10, was treated as in Example 8 and evaluated as a contact lens. The results are shown in Table 3.

### Example 14

A soft article having the shape of a contact lens of maximum thickness 0.4 mm, prepared as described in Example 10, was treated as in Example 9 and evaluated as a contact lens. The results are shown in Table 3.

### Comparative example 2

A soft article having the shape of a contact lens of maximum thickness 0.4 mm was prepared as described in Example 10, and evaluated as a contact lens without any further treatment. The results are shown in Table 3.

TABLE 3

| Evaluation item | Ex. 10 | Ex. 11 | Ex. 12 | Ex. 13 | Ex. 14 | Comp. Ex. 2 |
|---|---|---|---|---|---|---|
| (a) Removability of stain | Good | Good | Good | Good | Good | Bad |
| (b) Wettability | Good | Good | Good | Good | Good | Bad |
| (c) Contact angle of water | 75° | 80° | 80° | 78° | 79° | 93° |
| (d) Visibility range when applied | Good | Good | Good | Good | Good | Bad |
| (e) Movability on eyeball when applied | Good | Good | Good | Good | Good | Bad |
| (f) Durability of improved layer | Good | Good | Good | Good | Good | Bad |
| (g) Light transmittance | Above 90% | Above 90% | Above 90% | Above 90% | Above 90% | Above 90% |
| (h) Abnormality when used for long time<br>Contact lens<br>Cornea | Good<br>Good | Good<br>Good | Good<br>Good | Good<br>Good | Good<br>Good | Bad<br>Bad |
| (i) Thickness of improved layer (μm) | 7 | 7 | 5 | 7 | 7 | 0 |
| (j) Oxygen permeability | 2.01 | 1.94 | 1.88 | 1.96 | 1.92 | 1.54 |

8

**0 068 800**

Note:
Items (a) to (h) were evaluated as in Table 1. Item (i) was evaluated as in Table 2. Item (j), oxygen permeability, was evaluated using a sliced disc of diameter 13 mm and thickness 0.2 mm (cut differently from a contact lens but otherwise treated as the contact lenses) and measured with an oxygen permeability measurement tester (manufactured by SCHEMA VERASATAE). The units of oxygen permeability are $cm^3 \cdot cm/cm^2 \cdot sec \cdot mm$ Hg. (1 mm Hg=133.322 Pa).

## Claims

1. A process for treating the surface of a substantially non-hydrous contact lens formed of a polymer comprising at least 80 mole percent of at least one acrylate and/or methacrylate, from 0.5 to 10 mole percent of at least one polyfunctional monomer and from 0 to 5% by volume of acrylic acid, which process comprises treating said contact lens under such conditions as to effect a surface layer of the lens of thickness of from 0.01 to 50 μm with
   (a) an aqueous solution of an inorganic salt and/or an organic salt at atmospheric pressure and at a temperature of from 90°C to the boiling point of the solution; or
   (b) an aqueous solution of an inorganic salt and/or an organic salt at superatmospheric pressure and at a temperature of from 100°C to the boiling point of the solution; or
   (c) an aqueous solution of an alkali having a concentration of from 5 to 50% by weight at a temperature of from 30 to 120°C; or
   (d) an aqueous solution of an acid having a concentration of from 5 to 90% by weight at a temperature of from 60 to 100°C; or
   (e) steam.

2. A process according to Claim 1, in which said acrylate and/or methacrylate is one or more of methyl acrylate, ethyl arcylate, propyl acrylate, isopropyl acrylate, butyl acrylate, isobutyl acrylate, t-butyl acrylate, 2-ethylhexyl acrylate, octyl acrylate, ethyl methacrylate, propyl methacrylate, isopropyl methacrylate, butyl methacrylate, isobutyl methacrylate, t-butyl methacrylate, 2-ethylhexyl methacrylate, hexyl methacrylate and octyl methacrylate.

3. A process according to Claim 1 or Claim 2, in which said polyfunctional monomer is a polyfunctional acrylate, polyfunctional methacrylate, olefin glycol diacrylate, polyolefin glycol diacrylate, olefin glycol dimethacrylate or polyolefin glycol dimethacrylate.

4. A process according to Claim 3, in which said polyfunctional monomer is ethylene glycol diacrylate, diethylene glycol diacrylate, triethylene glycol diacrylate, ethylene glycol dimethacrylate, diethylene glycol dimethacrylate, triethylene glycol dimethacrylate, trimethylolpropane trimethacrylate, allyl acrylate or a vinyl-substituted benzyl acrylate.

5. A process according to any one of Claims 1 to 4, in which said inorganic salt is a sulphite, sulphate, nitrite, nitrate, phosphate or halide of a metal from Group Ia, Ib, IIa, IIb, IIIa, IVa, VIb, VIIb or VIII of the Periodic Table of the Elements.

6. A process according to Claim 5, in which said inorganic salt is one or more of sodium sulphite, potassium sulphite, sodium sulphate, potassium sulphate, sodium hydrogen sulphate (monohydrate), zinc sulphate (hexahydrate), copper sulphate (pentahydrate), aluminium sulphate, chromous sulphate (heptahydrate), stannous sulphate (dihydrate), manganese sulphate, ferrous sulphate (heptahydrate), nickel sulphate (hexahydrate), sodium nitrite, potassium nitrite, barium nitrite, sodium nitrate, potassium nitrate, calcium nitrate (tetrahydrate), barium nitrate, cobalt nitrate (hexahydrate), nickel nitrate (hexahydrate), sodium phosphate (dodecahydrate), potassium phosphate, lithium chloride, sodium chloride, potassium chloride, beryllium chloride (tetrahydrate), calcium chloride (hexahydrate), magnesium chloride (hexahydrate), barium chloride (dihydrate), cuprous chloride (dihydrate), aluminium chloride (hexahydrate), lead dichloride (dihydrate), manganese chloride (tetrahydrate), ferrous chloride (tetrahydrate), ferric chloride (hexahydrate), cobalt chloride, nickel chloride (hexahydrate) and lithium bromide.

7. A process according to any one of Claims 1 to 4, in which said organic salt is a formate, acetate or citrate of a metal from Group Ia or IIa of the Periodic Table of the Elements.

8. A process according to Claim 7, in which said organic salt is sodium formate, potassium formate, calcium formate, sodium acetate (trihydrate), potassium acetate, calcium acetate (monohydrate), zinc acetate (dihydrate), lead acetate (trihydrate), nickel acetate, sodium citrate (dihydrate), potassium citrate (monohydrate) or calcium citrate (tetrahydrate).

9. A process according to any one of Claims 5 to 8, in which the concentration of inorganic or organic salt is from 2% by weight to saturation.

10. A process according to any one of Claims 1 to 4, in which the alkali is sodium hydroxide or potassium hydroxide.

11. A process according to any one of Claims 1 to 4, in which the acid is hydrochloric acid, sulphuric acid or acetic acid.

12. A process according to Claim 1 or Claim 10, in which the article is subjected first to said treatment with an aqueous alkali solution and then to a treatment with an aqueous acid solution.

9

13. A process according to Claim 12, in which the concentration of said aqueous acid solution is from 1 to 30% by weight and the treatment with the aqueous acid solution is conducted at a temperature of from 20 to 100°C and for a period of from 5 seconds to 24 hours.

14. A process according to Claim 13, in which the acid is hydrochloric acid, sulphuric acid or acetic acid.

15. A process according to any preceding Claim, in which, after said treatment, said article is washed with water, dried and then treated with a polyhydric alcohol in the presence of an acid catalyst.

16. A process according to Claim 15, in which said acid catalyst is concentrated sulphuric acid or methanesulphonic acid.

17. A process according to Claim 15 or Claim 16, in which said polyhydric alcohol is ethylene glycol, glycerol or polyethylene glycol.

18. A process according to any one of Claims 15, 16 and 17, in which the acid catalyst is employed in an amount of from 0.1 to 5 parts by weight per 100 parts by weight of the polyhydric alcohol.

19. A process according to any one of Claims 15 to 18, in which the treatment with said polyhydric alcohol and acid catalyst is effected at a temperature of from 70 to 200°C for a period of from 1 to 24 hours.

**Patentansprüche**

1. Verfahren zur Behandlung der Oberfläche einer im wesentlichen nicht wasserhaltigen Kontaktlinse aus einem Polymer enthaltend mindestens 80 Mol-% mindestens eines Acrylats und/oder Methacrylats, von 0,5 bis 10 Mol-% mindestens eines polyfunktionellen Monomers und von 0 bis 5 Volumenprozent Acrylsäure, bei welchem die Kontaktlinse unter solchen Bedingungen, daß die Oberflächenschicht der Linse auf einer Dicke von 0,01 bis 50 µm beeinflußt wird, mit

(a) einer wässrigen Lösung eines anorganisches Salzes und/oder eines organischen Salzes bei atmosphärischem Druck und einer Temperatur von 90°C bis zum Siedepunkt der Lösung oder

(b) einer wässrigen Lösung eines anorganischen Salzes und/oder eines organischen Salzes bei überatmosphärischem Druck und einer Temperatur von 100°C bis zum Siedepunkt der Lösung oder

(c) einer wässrigen Lösung einer Alkalimetallverbindung mit einer Konzentration von 5 bis 50 Gewichtsprozent bei einer Temperatur von 30 bis 120°C oder

(d) einer wässrigen Lösung einer Säure mit einer Konzentration von 5 bis 90 Gewichtsprozent bei einer Temperatur von 60 bis 100°C oder

(e) Dampf behandelt wird.

2. Verfahren nach Anspruch 1, bei welchem das Acrylat und/oder Methacrylat eine oder mehrere der Verbindungen Methylacrylat, Ethylacrylat, Propylacrylat, Isopropylacrylat, Butylacrylat, Isobutylacrylat, t-Butylacrylat, 2-Ethylhexylacrylat, Octylacrylat, Ethylmethacrylat, Propylmethacrylat, Isopropylmethacrylat, Butylmethacrylat, Isobutylmethacrylat, t-Butylmethacrylat, 2-Ethylhexylmethacrylat, Hexylmethacrylat und Octylmethacrylat ist.

3. Verfahrfen nach Anspruch 1 oder 2, bei welchem das polyfunktionelle Monomer eine polyfunktionelles Acrylat, polyfunctionnelles Methacrylat, Olefinglycol-diacrylat, Polyolefinglycol-diacrylat, Olefinglycol-dimethacrylat oder Polyolefinglycol-dimethacrylat ist.

4. Verfahren nach Anspruch 3, bei welchem das polyfunktionelle Monomer ein Ethylenglycol-diacrylat, Diethylenglycol-diacrylat, Triethylenglycol-diacrylat, Ethylenglycol-dimethacrylat, Diethylenglycoldimethacrylat, Triethylenglycol-dimethacrylat, Trimethylolpropantrimethacrylat, Allylacrylat oder ein vinyl-substituiertes Benzylacrylat ist.

5. Verfahren nach einem der Ansprüche 1 bis 4, bei welchem das anorganische Salz ein Sulfit, Sulfat, Nitrit, Nitrat, Phosphat oder Halogenid eines Metalls der Gruppe Ia, Ib, IIa, IIb, IIIa, IVa, VIb, VIIb oder VIII des Periodensystems der Elemente ist.

6. Verfahren nach Anspruch 5, bei welchem das anorganische Salz eine oder mehrere der Verbindungen Natriumsulfit, Kaliumsulfit, Natriumsulfat, Kaliumsulfat, Natriumhydrogensulfat (Monohydrat), Zinksulfat (Hexahydrat), Kupfersulfat (Pentahydrat), Aluminiumsulfat, Chrom(II)-sulfat, (Heptahydrat), Zinn(II)-sulfat (Dihydrat), Mangansulfat, Eisen(II)-Sulfat (Heptahydrat), Nickelsulfat, (Hexahydrat), Natriumnitrit, Kaliumnitrit, Bariumnitrit, Natriumnitrat, Kaliumnitrat, Calciumnitrat (Tetrahydrat), Bariumnitrat, Kobaltnitrat (Hexahydrat), Nickelhydrat (Hexahydrat), Natriumphosphat (Dodecahydrat), Kaliumphosphat, Lithiumchlorid, Natriumchlorid, Kaliumchlorid, Berylliumchlorid (Tetrahydrat), Calciumchlorid (Hexahydrat), Magnesiumchloride (Hexahydrat), Bariumchlorid (Dihydrat), Kupfer(II)-chlorid (Dihydrat), Aluminiumchlorid (Hexahydrat), Bleidichlorid (Dihydrat), Manganchlorid (Tetrahydrat), Eisen(II)-chlorid, Eisen(III)-chlorid (Hexahydrat), Cobaltchlorid, Nickelchlorid (Hexahydrat) und Lithiumbromid ist.

7. Verfahren nach einem der Ansprüche 1 bis 4, bei welchem das organische Salz ein Formiat, Acetat oder Citrat eines Metalls der Gruppe Ia oder IIa des Periodensystems der Elemente ist.

8. Verfahren nach Anspruch 7, bei welchem das organische Salz Natriumformiat, Kaliumformiat, Calciumformiat, Natriumacetat (Trihydrat), Kaliumacetat, Calciumacetat (Monohydrat), Zinkacetat (Dihydrat), Bleiacetat (Trihydrat), Nickelacetat, Natriumcitrat (Dihydrat), Kaliumcitrat (Monohydrat) oder Calciumcitrat (Tetrahydrat) ist.

9. Verfahren nach einem der Ansprüche 5 bis 8, bei welchem die Konzentration des anorganischen oder organischen Salzes von 2 Gewichtsprozent bis Sättigung beträgt.

10. Verfahren nach einem der Ansprüche 1 bis 4, bei welchem die Alkalimetallverbindung Natriumhydroxid oder Kaliumhydroxid ist.

11. Verfahren nach einem der Ansprüche 1 bis 4, bei welchem die Säure Salzsäure, Schwefelsäure oder Essigsäure ist.

12. Verfahren nach Anspruch 1 oder 10, bei welchem der Gegenstand zunächst der Behandlung mit einer wässrigen Alkalilösung und dann einer Behandlung mit einer wässrigen sauren Lösung unterworfen wird.

13. Verfahren nach Anspruch 12, bei welchem die Konzentration der wässrigen sauren Lösung 1 bis 30 Gewichtsprozent beträgt und die Behandlung mit der wässrigen sauren Lösung bei einer Temperatur von 20 bis 100°C während 5 Sekunden bis 24 Stunden erfolgt.

14. Verfahren nach Anspruch 13, bei welchem die Säure Salzsäure, Schwefelsäure oder Essigsäure ist.

15. Verfahren nach einem der vorangehenden Ansprüche, bei welchem nach der genanten Behandlung der Gegenstand mit Wasser gewaschen, getrocknet und anschliessend mit einem mehrwertigen Alkohol in Gegenwart eines sauren Katalysators behandelt wird.

16. Verfahren nach Anspruch 15, bei welchem der saure Katalysator konzentrierte Schwefelsäure oder Methansulfonsäure ist.

17. Verfahren nach Anspruch 15 oder 16, bei welchem der mehrwertige Alkohol Ethylenglycol, Glyzerin oder Polyethylenglycol ist.

18. Verfahren nach einem der Ansprüche 15, 16 und 17, bei welchem der Katalysator in einer Menge von 0,1 bis 5 Gewichtsteilen je 100 Gewichtsteile des mehrwertigen Alkohols verwendet wird.

19. Verfahren nach einem der Ansprüche 15 bis 18, bei welchem die Behandlung mit dem mehrwertigen Alkohol und dem sauren Katalysator bei einer Temperatur von 70 bis 200°C während 1 bis 24 Stunden erfolgt.

## Revendications

1. Procédé pour le traitement de la surface d'une lentille de contact essentiellement non hydratée formée d'un polymère comprenant au moins 80 % molaires d'au moins un acrylat et/ou méthacrylate, de 0,5 à 10 % molaires d'au moins un monomère polyfonctionnel et de 0 à 5 % en volume d'acide acrylique, lequel procédé comprend le traitement de ladite lentille de contact dans des conditions telles qu'une couche superficielle de la lentille épaisse de 0,01 à 50 µm soit modifiée avec

(a) une solution aqueuse d'un sel minéral et/ou d'un sel organique à la pression atmosphérique et à une température comprise entre 90°C et le point d'ébullition de la solution; ou

(b) une solution aqueuse d'un sel minéral et/ou d'un sel organique à une pression supérieure à la pression atmosphérique et à une température comprise entre 100°C et le point d'ébullition de la solution; ou

(c) une solution aqueuse d'un alcali ayant une concentration de 5 à 50 % en poids à une température de 30 à 120°C; ou

(d) une solution aqueuse d'un acide ayant une concentration de 5 à 90 % en poids à une température de 60 à 100°C; ou

(e) de la vapeur d'eau.

2. Procédé selon la revendication 1, dans lequel ledit acrylate et/ou méthacrylate est un ou plusieurs de l'acrylate de méthyle, l'acrylate d'éthyle, l'acrylate de propyle, l'acrylate d'isopropyle, l'acrylate de butyle, l'acrylate d'isobutyle, l'acrylate de tert-butyle, l'acrylate de 2-éthylhexyle, l'acrylate d'octyle, le méthacrylate d'éthyle, le méthacrylate de propyle, le méthacrylate d'isopropyle, le méthacrylate de butyle, le méthacrylate d'isobutyle, le méthacrylate de tert-butyl, le méthacrylate de 2-éthylhexyle, le méthacrylate d'hexyle et le méthacrylate d'octyle.

3. Procédé selon la revendication 1 ou la revendication 2, dans lequel ledit monomère polyfonctionnel est un acrylate polyfunctionnel, un méthacrylate polyfonctionnel, un diacrylate d'oléfineglycol, un diacrylate de polyoléfineglycol, un diméthacrylate d'oléfineglycol ou un diméthacrylate de polyoléfineglycol.

4. Procédé selon la revendication 3, dans lequel ledit monomère polyfonctionnel est le diacrylate d'éthyléneglycol, le diacrylate de diéthylèneglycol, le diacrylate de triéthylèneglycol, le diméthacrylate, d'éthylèneglycol, le diméthacrylate de diéthylèneglycol, le diméthacrylate de triéthylèneglycol, le triméthacrylate de triméthylolpropane, l'acrylate d'allyle ou un acrylate de benzyle à substitution vinylique.

5. Procédé selon l'une quelconque des revendications 1 à 4, dans lequel ledit sel minéral est un sulfite, sulfate, nitrite, nitrate, phosphate ou halogénure d'un métal des groupes Ia, Ib, IIa, IIb, IIIa, IVa, VIb, VIIb ou VIII de la classification périodique des éléments.

6. Procédé selon la revendication 5, dans lequel ledit sel minéral est un ou plusieurs du sulfite de sodium, sulfite de potassium, sulfate de sodium, sulfate de potassium, hydrogénosulfate de sodium (monohydraté), sulfate de zinc (hexahydraté), sulfate de cuivre (pentahydraté), sulfate d'aluminium, sulfate chromeux (heptahydraté), sulfate stanneux (dihydraté), sulfate de manganèse, sulfate ferreux (heptahydraté), sulfate de nickel (hexahydraté), nitrite de sodium, nitrite de potassium, nitrite de baryum, nitrate de sodium, nitrate de potassium, nitrate de calcium (tétrahydraté), nitrate de baryum, nitrate de cobalt (hexahydraté), nitrate de nickel (hexahydraté), phosphate de sodium (dodécahydraté), phosphate de

**0 068 800**

potassium, chlorure de lithium, chlorure de sodium, chlorure de potassium, chlorure de béryllium (tétrahydraté), chlorure de calcium (hexahydraté), chlorure de magnésium (hexahydraté), chlorure de baryum (dihydraté), chlorure cuivreux (dihydraté), chlorure d'aluminium (hexahydraté), dichlorure de plomb (dihydraté), chlorure de manganèse (tétrahydraté), chlorure ferreux (tétrahydraté), chlorure ferrique (hexahydraté), chlorure de cobalt, chlorure de nickel (hexahydraté) et bromure de lithium.

7. Procédé selon l'une quelconque des revendications 1 à 4, dans lequel ledit sel organique est un formiate, acétate ou citrate d'un métal du groupe Ia ou IIa de la classification périodique des éléments.

8. Procédé selon la revendication 7, dans lequel ledit sel organique est le formiate de sodium, le formiate de potassium, le formiate de calcium, l'acétate de sodium (trihydraté), l'acétate de potassium, l'acétate de calcium (monohydraté), l'acétate de zinc (dihydraté), l'acétate de plomb (trihydraté), l'acétate de nickel, le citrate de sodium (dihydraté), le citrate de potassium (monohydraté) ou le citrate de calcium (tétrahydraté).

9. Procédé selon l'une quelconque des revendications 5 à 8, dans lequel la concentration du sel minéral ou organique est comprise entre 2 % en poids et la saturation.

10. Procédé selon l'une quelconque des revendications 1 à 4, dans lequel l'alcali est l'hydroxyde de sodium ou l'hydroxyde de potassium.

11. Procédé selon l'une quelconque des revendications 1 à 4, dans lequel l'acide est l'acide chlorhydrique, l'acide sulfurique ou l'acide acétique.

12. Procédé selon la revendication 1 ou la revendication 10, dans lequel l'article est d'abord soumis audit traitement avec une solution aqueuse d'alcali puis à un traitement avec une solution aqueuse d'acide.

13. Procédé selon la revendication 12, dans lequel la concentration de ladite solution aqueuse d'acide est de 1 à 30 % en poids et le traitement avec la solution aqueuse d'acide est effectué à une température de 20 à 100°C et pendant une période de 5 secondes à 24 heures.

14. Procédé selon la revendication 13, dans lequel l'acide est l'acide chlorhydrique, l'acide sulfurique ou l'acide acétique.

15. Procédé selon l'une quelconque des revendications précédentes, dans lequel, après ledit traitement, ledit article est lavé avec de l'eau, séché, puis traité avec un poly-alcool en présence d'un catalyseur acide.

16. Procédé selon la revendication 15, dans lequel ledit catalyseur acide est l'acide sulfurique concentré ou l'acide méthanesulfonique.

17. Procédé selon la revendication 15 ou la revendication 16, dans lequel ledit poly-alcool est l'éthylèneglycol, le glycérol ou un polyéthylèneglycol.

18. Procédé selon l'une quelconque des revendications 15, 16 et 17, dans lequel ledit catalyseur acide est utilisé en une quantité de 0,1 à 5 parties en poids pour 100 parties en poids du poly-alcool.

19. Procédé selon l'une quelconque des revendications 15 à 18, dans lequel le traitement avec ledit poly-alcool et le catalyseur acide est effecuté à une température de 70 à 200°C pendant une période de 1 à 24 heurs.